# DEMANDE DE BREVET EUROPEEN

(11) **EP 1 258 966 A1**
(43) Date de publication de la demande: **20.11.2002**
(21) Numéro de dépôt: 02009138.5
(22) Date de dépôt: 24.04.2002
(51) Int. Cl.: H02J 13/00

(54) **Gestion à distance des pompes électriques**

(30) Priorité: 24.04.2001 FR 0105494
(71) Demandeur: Pompes Salmson, 92500 Rueil Malmaison (FR)
(72) Inventeur: Kernours, Michel, 35370 Mondevert (FR)
(74) Mandataire: Cabinet Hirsch

(57) **Abrégé**

Le procédé de communication entre un circuit de commande (12a) d'une pompe électrique (10a) et un circuit distant (1) en liaison électrique avec la pompe par l'intermédiaire du circuit de commande, le circuit distant alimentant en électricité la pompe au travers de cette liaison électrique (11a), consiste à faire communiquer le circuit distant et le circuit de commande au travers de la liaison électrique. Pour communiquer avec le circuit de commande, le circuit distant provoque des coupures de l'alimentation de la pompe qui sont détectées par le circuit de commande. Pour communiquer avec le circuit de commande, le circuit de commande génère une séquence prédéfinie de marche/arrêt de la pompe détectée par le circuit distant.

Application à une station de relevage de liquide.

## Description

La présente invention concerne un procédé de communication entre un circuit de commande d'une pompe électrique et un circuit distant alimentant en électricité la pompe par le biais du circuit de commande. Il concerne aussi un dispositif de pompage et un dispositif d'alimentation électrique de pompes mettant en oeuvre le procédé de communication de l'invention. L'invention porte aussi sur une station de relevage de liquide à deux pompes alimentées par un circuit distant dans laquelle est appliqué le procédé de communication de l'invention. L'invention porte encore sur un procédé de gestion de cette station de relevage de liquide.

La présente invention a pour but de proposer un procédé de communication entre le circuit de commande d'une pompe électrique et un circuit distant l'alimentant, qui a l'avantage d'être d'une mise en oeuvre simple, peu cher, fiable et permettant en outre une gestion facile de stations de pompage comprenant une pluralité de pompes.

A cette fin, la présente invention propose un procédé de communication entre un circuit de commande d'une pompe électrique et un circuit distant en liaison électrique avec la pompe par l'intermédiaire du circuit de commande, le circuit distant alimentant en électricité la pompe au travers de cette liaison électrique, dans lequel le circuit distant et le circuit de commande communiquent au travers de la liaison électrique.

Selon une variante, la communication du circuit distant vers le circuit de commande comprend les étapes de :
application d'une séquence prédéfinie d'une ou plusieurs coupures de l'alimentation de la pompe par le circuit distant ;
détection des coupures de l'alimentation de la pompe par le circuit de commande.

Selon une autre variante, il comprend une étape de :
commande de la pompe par le circuit de commande en fonction des coupures de l'alimentation de la pompe détectées.

Selon encore une variante, dans l'étape c), le circuit de commande commande la pompe en fonction de la fréquence des coupures de l'alimentation de la pompe détectées.

Selon encore une autre variante, dans l'étape a), le circuit distant applique la séquence de coupures de l'alimentation de la pompe avec une première fréquence prédéfinie, dans l'étape b), le circuit de commande détermine si la fréquence des coupures de l'alimentation de la pompe détectées correspond à la première fréquence, dans l'étape c), le circuit de commande met en veille la pompe s'il a déterminé que la fréquence des coupures de l'alimentation de la pompe détectées correspond à la première fréquence.

On peut également prévoir que dans l'étape a), le circuit distant applique la séquence de coupures de l'alimentation de la pompe avec une deuxième fréquence prédéfinie, que dans l'étape b), le circuit de commande détermine si la fréquence des coupures de l'alimentation de la pompe détectées correspond à la deuxième fréquence, et que dans l'étape c), le circuit de commande active la pompe s'il a déterminé que la fréquence des coupures de l'alimentation de la pompe détectées correspond à la deuxième fréquence.

Selon une variante, on effectue une étape de vérification par le circuit distant si le courant fourni à la pompe est inférieur à un seuil prédéterminé qui est inférieur ou égal au courant absorbé par la pompe en marche, dans lequel le circuit distant n'applique l'étape a) que si la vérification est positive.

Selon une autre variante, chaque coupure a une durée de l'ordre de 0,1 à 0,3 seconde.

Selon encore une variante, la communication du circuit de commande vers le circuit distant comprend les étapes de :
application d'une séquence prédéfinie d'une ou plusieurs mises en marche et arrêts de la pompe par le circuit de commande ;
détection par le circuit distant des variations de courant fourni à la pompe.

Selon encore une autre variante, on réalise l'application de l'étape d) dans le cas où le circuit de commande détermine un défaut de fonctionnement de la pompe tel qu'un défaut d'au moins un détecteur de niveau de liquide de la pompe.

Il est également possible que dans l'étape d), le circuit de commande applique une séquence de mises en marche et d'arrêts de la pompe avec une fréquence prédéfinie qui est fonction du défaut déterminé, et que dans l'étape e), le circuit distant détermine si la fréquence des variations de courant fourni à la pompe détectées correspond à la fréquence prédéfinie.

L'invention concerne également un dispositif de pompage comprenant une pompe électrique et un circuit de commande de la pompe, comprenant des moyens pour mettre en oeuvre le procédé de communication de l'invention lorsqu'il est branché sur une alimentation électrique.

L'invention concerne encore un dispositif d'alimentation d'une ou plusieurs pompes, comprenant un circuit pour mettre en oeuvre le procédé de l'invention lorsqu'il alimente une pompe.

L'invention concerne en outre une station de relevage de liquide comprenant :
une première pompe électrique et un circuit de commande de la première pompe, une deuxième pompe électrique et un circuit de commande de la deuxième pompe et un circuit distant en première liaison électrique avec la première pompe par l'intermédiaire du circuit de commande de la première pompe, le circuit distant alimentant en électricité la première pompe au travers de cette première liaison électrique et le circuit distant étant en deuxième liaison électrique avec la deuxième pompe par l'intermédiaire du circuit de commande de la deuxième pompe, le circuit distant alimentant en électricité la deuxième pompe au travers de cette deuxième liaison électrique, station dans laquelle le circuit distant et le circuit de commande de la première pompe ainsi que le circuit distant et le circuit de commande de la deuxième pompe mettent en oeuvre le procédé de communication de l'invention.

L'invention concerne également un procédé de gestion de la station de pompage selon l'invention, dans lequel le circuit distant détecte la fin du pompage de la première pompe en mesurant le courant qu'il fournit à la première pompe et à la fin du pompage de la première pompe, le circuit distant communique au circuit de commande de la première pompe de mettre la première pompe en veille et au circuit de commande de la deuxième pompe d'activer la deuxième pompe.

Selon une variante, la première pompe comprend un détecteur de niveau de liquide, le circuit de commande de la première pompe détermine un défaut du détecteur, en cas de détermination d'un défaut du détecteur, le circuit de commande de la première pompe communique l'existence du défaut au circuit distant qui en conséquence communique au circuit de commande de la deuxième pompe d'activer la deuxième pompe.

Selon une autre variante, la première pompe comprend une pluralité de détecteurs de niveau de liquide, le circuit de commande de la première pompe détermine un défaut des détecteurs du type permanence de détection, en cas de détermination d'un défaut du type permanence de détection de tous les détecteurs, le circuit de commande de la première pompe communique l'existence de ce défaut au circuit distant qui en conséquence mesure le courant qu'il fournit à la première pompe et communique au circuit de commande de la première pompe d'activer ou de mettre en veille la première pompe en fonction du courant mesuré.

Selon encore une variante, en conséquence de la communication de l'existence de ce défaut par le circuit de commande de la première pompe au circuit distant, le circuit distant communique en outre au circuit de commande de la deuxième pompe d'activer la deuxième pompe.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente schématiquement une station de relevage d'effluent selon un mode de réalisation de l'invention.

La figure 2 représente un synoptique du circuit électrique du coffret et du circuit de commande de la première pompe de la station de relevage de la figure 1.

La figure 3 illustre des coupures de l'alimentation d'une pompe de la station de la figure 1 pour lui transmettre une information.

La figure 4 illustre une séquence de démarrages et arrêts de la pompe de la station 1 pour signaler un défaut.

La figure 5 illustre le courant fourni aux pompes en fonction du temps pour la station de relevage de la figure 1 dans un mode de gestion normal.

La figure 6 illustre le courant fourni aux pompes en fonction du temps pour la station de relevage de la figure 1 en cas de détection d'un défaut d'une pompe.

Les figures 7 et 8 illustrent le courant fourni aux pompes en fonction du temps pour la station de relevage de la figure 1 en cas de détection d'un niveau trop plein par une pompe avec respectivement confirmation de ce défaut et détermination d'une défaillance des détecteurs de niveaux.

Nous allons décrire un mode de réalisation de l'invention dans la forme d'une station de relevage d'effluent pour des applications domestiques telles que des vides cave automatiques.

La station de relevage d'effluent comprend deux pompes à moteur électrique 10a, 10b et un coffret de gestion des pompes 1.

Le coffret 1 est alimenté de préférence par le réseau électrique, généralement en monophasé 230 V ou en triphasé 400 V, 50 Hz ou 60 Hz selon le besoin en alimentation électrique des pompes. Pour cela, il comprend un cordon électrique 2 muni d'une fiche mâle ou tout autre moyen approprié. Par ailleurs, il comprend une première sortie d'alimentation 3 et une deuxième sortie d'alimentation 4. La première sortie 3 sert à alimenter en électricité la première pompe 10a et la deuxième sortie 4 sert à alimenter en électricité la deuxième pompe 10b. Chacune des pompes 10a, 10b est connectée, de préférence de façon amovible, à la sortie correspondante 3, 4 du coffret 1 par tout moyen approprié. Avantageusement, les sorties 3, 4 du coffret se présentent chacune sous la forme d'une prise électrique et les pompes 10a, 10b sont chacune équipées d'un cordon d'alimentation 11a, 11b muni d'une fiche mâle pouvant être enfichée dans la prise correspondante du coffret 1.

Le coffret 1 pourra par exemple être adapté pour être fixé à un mur à proximité des deux pompes 10a, 10b.

De préférence, le coffret 1 alimente électriquement chacune des sorties 3, 4 à partir du réseau électrique auquel il est branché. Le coffret 1 alimente sélectivement la sortie 3 ainsi que la sortie 4. Pour cela, le coffret 1 comprend un relais RP1 ouvrant ou fermant la liaison entre le réseau électrique et la sortie 3 et un relais RP2 ouvrant ou fermant la liaison électrique entre le réseau électrique et la sortie 4. Les relais RP1 et RP2 peuvent être remplacés par des interrupteurs commandés d'un autre type tels que des triacs ou des thyristors. Les relais RP1 et RP2 sont commandés par une logique de commande 5 pouvant inclure un microprocesseur.

La logique de commande 5 est alimentée par une alimentation continue 6 reliée au réseau électrique ou par tout autre moyen approprié. L'alimentation continue 6 peut notamment être d'un type classique comprenant un transformateur basse tension coopérant avec un pont de diode et un circuit de filtrage.

Par ailleurs, le coffret 1 comprend des moyens pour vérifier si la pompe 10a et la pompe 10b sont en cours de fonctionnement ou non - c'est-à-dire si leur moteur est en marche ou non. Pour cela, le coffret 1 compare le courant absorbé par chaque pompe 10a, 10b à un seuil prédéterminé. Au-dessus de ce seuil, le moteur est considéré en marche et en deçà il est considéré être à l'arrêt. Ce seuil est évidemment fixé en dessous du courant minimal qu'absorbe le moteur en marche, quel que soit sa charge, en particulier si la pompe tourne à vide. Pour fixer ce seuil, on tiendra compte du courant consommé par la pompe même si son moteur est à l'arrêt. Ceci peut être le cas du fait de circuits annexes de la pompe tel que son circuit de commande comme nous le verrons plus loin, mais le courant correspondant est évidemment faible par rapport à celui absorbé par le moteur. La mise en oeuvre de cette comparaison peut être réalisée de façon connue en soi. Elle pourra notamment comprendre une résistance shunt 7 insérée dans la liaison d'alimentation entre le réseau électrique et la sortie 3 pour mesurer le courant de la première pompe 10a et une résistance shunt 8 insérée dans la liaison d'alimentation entre le réseau électrique et la sortie 4 pour mesurer le courant de la deuxième pompe 10b. La tension aux bornes de chacune des résistances shunt 7, 8 est représentative du courant fourni à la pompe correspondante. Un circuit comparateur IN/P1 assure la comparaison requise à partir de la tension aux bornes de la résistance shunt 7 et fournit le résultat à une entrée de la logique de commande 5. De façon similaire, un comparateur IN/P2 assure la comparaison requise à partir de la tension aux bornes de la résistance shunt 8 et fournit le résultat à une autre entrée de la logique de commande 5. Les comparateurs IN/P1 et IN/P2 peuvent être réalisés de façon connue en soi.

Le coffret 1 peut comprendre en outre des moyens signalant des défauts de fonctionnement de la station de relevage. Ces moyens sont commandés par la logique de commande 5. A titre d'exemple, il peut s'agir d'une sonnerie 9 ou encore de voyants lumineux (non représentés). Il peut également s'agir d'un relais RF pour fermer ou ouvrir des contacts permettant d'informer un circuit extérieur (non représenté), par exemple une sirène, de l'existence d'un défaut.

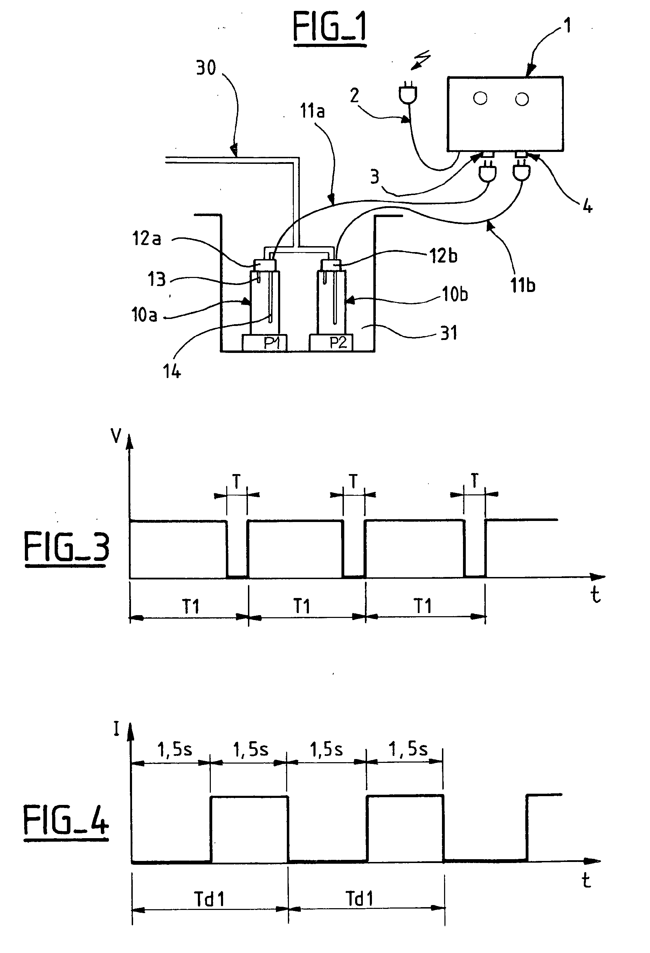

Les deux pompes 10a, 10b sont des pompes de relevage d'effluent pouvant être d'un type classique. Dans notre exemple, ce sont des pompes de type submersibles. Elles aspirent chacune les effluents dans un même puits 31. Elles refoulent les effluents hors du puits 31 par une canalisation commune 30 comme illustré sur la figure 1 ou, en variante, par une canalisation propre à chacune.

Chacune des pompes 10a, 10b comprend un moteur électrique pour l'entraîner. Le moteur de la pompe 10a est référencé 17 sur la figure 2. Il s'agira généralement d'un moteur monophasé 230 V - c'est le cas du mode de réalisation décrit - ou d'un moteur triphasé 400 V. Chacune des pompes 10a, 10b comprend aussi un circuit de commande 12a, 12b.

Nous ne décrirons que le circuit de commande 12a de la première pompe 10a, étant donné que le circuit de commande 12b de la deuxième pompe 10b est similaire au circuit de commande 12a. Pour cette raison et dans un souci de clarté, la figure 2 ne représente pas le circuit de commande 12b.

Le circuit de commande 12a est de préférence monté sur la pompe 10a. Le moteur électrique de la pompe 10a est alimenté par le coffret 1 - par sa première sortie 3 - par l'intermédiaire du circuit de commande 12a. Autrement dit, le circuit de commande 12a commande le démarrage et l'arrêt du moteur de la pompe 10a.

Le circuit de commande 12a met en oeuvre au moins deux modes de fonctionnement de la pompe 10a.

Dans un premier mode dit « actif», le circuit de commande 12a fait effectuer des cycles de pompage à la pompe 10a. Un cycle de pompage comprend typiquement le démarrage du moteur de la pompe 10a lorsque l'effluent a atteint un niveau haut et arrête le moteur lorsque l'effluent a atteint un autre niveau, inférieur au niveau haut. Pour permettre au circuit de commande 12a de déterminer la présence de l'effluent à ces deux niveaux, il peut être recouru à toute technique connu. Ainsi, il peut être utilisé un système classique à flotteur qui ouvre ou ferme des contacts en fonction du niveau de l'effluent présent dans le puits 31. Il peut aussi être recouru à des détecteurs de niveaux statiques tels que des capteurs à ultrasons ou des capteurs mesurant la résistance électrique de l'effluent. La figure 1 illustre schématiquement un premier capteur 13 détectant l'effluent au niveau haut et un deuxième capteur 14 détectant l'effluent à un niveau inférieur au niveau haut.

Dans un deuxième mode dit « de veille », le circuit de commande 12a laisse le moteur de la pompe 10a à l'arrêt, quel que soit le niveau de l'effluent dans le puits 31.

Le circuit de commande 12a comprend une logique de commande 15 pour mettre en oeuvre ces deux modes de fonctionnement. La logique de commande pourra notamment inclure un microprocesseur. La logique de commande 15 reçoit à des entrées, repérées NH et NB, les signaux des capteurs de niveaux d'effluent 13 et 14.

Pour commander le démarrage et l'arrêt du moteur 17, le circuit de commande 12a comprend un interrupteur commandé 18 inséré dans la liaison électrique du cordon 11a avec le moteur 17. Cet interrupteur commandé 18 peut être un relais, un composant du type triac ou thyristor ou tout autre moyen approprié.

Les différents éléments du circuit de commande 12a sont de préférence alimentés par une alimentation continue 16 reliée au réseau électrique par le biais du cordon d'alimentation 11a. L'alimentation continue 16 peut être d'un type classique comprenant un transformateur basse tension coopérant avec un pont de diodes et un circuit de filtrage, tel qu'illustré par la figure 2.

Par ailleurs, le circuit de commande 12a détecte les coupures de courant électrique de l'alimentation de la pompe 10a provoquées par le coffret 1. Autrement dit, il vérifie si la tension d'alimentation est présente sur le cordon d'alimentation 11a. Cette détection peut être mise en oeuvre par un circuit 19 à partir de la tension redressée non filtrée disponible à la sortie du pont de diodes de l'alimentation 16. Comme illustré, le circuit 19 pourra comprendre une diode suivie d'un condensateur de filtrage et une résistance dans lequel celui-ci débite. On obtient ainsi une tension continue filtrée aux bornes de la résistance. Si l'alimentation de la pompe 10a est coupée, la tension à la sortie du pont de diodes devient nulle et le condensateur du circuit 19 se décharge dans la résistance associée. Il suffit donc de comparer la tension aux bornes de cette résistance par rapport à un seuil inférieur à sa tension nominale pour détecter la coupure de l'alimentation de la pompe 10a. Cette comparaison peut être mise en oeuvre par la logique de commande 15 de façon classique. Dans le but d'assurer une détection fiable, on choisira la résistance et le condensateur du circuit 19 de façon à ce que la décharge de ce condensateur soit suffisamment rapide par rapport à la durée des coupures de l'alimentation de la pompe 10a à détecter.

Nous allons maintenant décrire la façon dont le coffret 1 communique avec chacune des pompes 10a, 10b. En fait, nous ne décrirons que la communication du coffret 1 vers la pompe 10a, étant donné que la communication du coffret 1 vers la pompe 10b est réalisée de façon similaire.

Le coffret 1 alimente habituellement en permanence la pompe 10a en électricité, c'est-à-dire l'interrupteur commandé RP1 maintient fermé la liaison électrique vers la sortie 3.

La communication entre le coffret 1 et le circuit de commande 12a de la pompe 10a s'effectue par le biais de la liaison d'alimentation de la pompe 10a. Autrement dit, la communication est faite à travers le cordon d'alimentation 11a de la pompe 10a.

Le coffret 1 transmet une information au circuit de commande 12a sous la forme d'une ou plusieurs coupures sur l'alimentation de la pompe 10a. Pour cela, la logique de commande 5 provoque ces coupures grâce à l'interrupteur commandé RP1. De son côté, le circuit de commande 12a détecte ces coupures grâce au circuit 19 et la logique 15 déjà mentionnés.

L'information à transmettre est donc codée par le coffret 1 - plus précisément, par la logique de commande 5 - sous forme de coupures de l'alimentation de la pompe 10a qui sont décodées par le circuit de commande 12a - plus précisément, par sa logique de commande 15.

Le circuit de commande 12a est conçu pour que son fonctionnement ne soit pas perturbé par ces coupures dans la mesure où le circuit de commande 12a est alimenté en commun avec le moteur 17 à partir de la sortie 3 du coffret - ce qui est le cas dans l'exemple décrit. Dans ce but, l'alimentation continue 16 pourra avantageusement être conçue pour pouvoir continuer à alimenter les différents éléments du circuit de commande 12a malgré les coupures précités. Dans notre exemple, on pourra choisir la valeur du condensateur de filtrage de l'alimentation 16 suffisamment grande pour qu'il puisse continuer à alimenter le circuit de commande 12a pendant chaque coupure de l'alimentation de la pompe 10a.

Les coupures de l'alimentation de la pompe 10a par le coffret 1 sont de préférence des microcoupures ayant une durée de l'ordre de 0,1 à 0,3 seconde. Le fait de recourir à des microcoupures a pour avantage de permettre une communication rapide et de limiter la taille du condensateur de filtrage de l'alimentation 16, tout en permettant une détection fiable de celles-ci par le circuit de commande 12a.

Le coffret 1 communique vers la pompe 10a de préférence pendant les périodes où son moteur 15 est à l'arrêt bien que cela ne soit pas indispensable. Dans le cas où la pompe 10a est en mode actif, le coffret 1 pourra vérifier si le moteur 15 est à l'arrêt grâce à ses moyens de vérification de la marche ou l'arrêt du moteur 15 - cf. résistance shunt 7 et comparateur IN/P1.

Le codage de l'information par le coffret 1 peut consister en ce que le coffret 1 génère des coupures successives à une fréquence donnée qui est fonction de l'information à transmettre. Le décodage par le circuit de commande 12a se fera alors en déterminant la fréquence des coupures détectées.

Nous donnons ici un exemple de codage dans lequel l'information transmise par le coffret 1 à la pompe 10a indique à cette dernière si elle doit se placer en mode actif ou en mode de veille.

Pour placer la pompe 10a en mode actif, le coffret 1 génère un certain nombre de microcoupures - autrement dit une salve ou un train de microcoupures - à une fréquence F1. Le circuit de commande 12a détecte ces coupures et détermine si elles se succèdent avec la fréquence F1. Dans l'affirmative, le circuit de commande 12a applique le mode actif. Le nombre de microcoupures est de préférence prédéterminé, par exemple six. La période T1 correspondant à la fréquence F1 pourra par exemple être comprise entre 0,9 et 1,1 seconde. L'allure de la tension d'alimentation de 1a pompe 10a - en valeur efficace - en fonction du temps est illustrée - pour trois coupures - par la figure 3 avec F1 = 1/T1 et T correspondant à la durée de chaque microcoupure. Le nombre de microcoupures à la fréquence F1 composant une de ces salves est de préférence supérieur au nombre de microcoupures utilisé par le circuit de commande 12a pour déterminer leur fréquence. Ceci permet une transmission plus fiable de l'information. A titre d'exemple, un train de ces microcoupures à la fréquence F1 peut être constitué de six microcoupures alors que le circuit de commande 12a n'en utilise que trois consécutifs pour déterminer leur fréquence.

Pour placer la pompe 10a en mode de veille, le fonctionnement est identique, sauf à ce que la fréquence F1 est remplacée par une fréquence F2 et que le circuit de commande 12a applique le mode de veille s'il a déterminé que les coupures se succèdent à la fréquence F2. La durée des microcoupures reste de préférence identique. La période T2 correspondant à la fréquence F2 pourra par exemple être comprise entre 1,2 et 1,4 seconde.

Bien entendu, d'autres manières de coder l'information sous forme de coupures peuvent être employées. Par exemple, une deuxième manière consiste pour le coffret 1 à générer un nombre donné de coupures successives dans un intervalle de temps prédéfini, ce nombre de coupures étant fonction de l'information à transmettre. Le décodage par le circuit de commande 12a se fera alors en déterminant le nombre de coupures successives détectées. Une troisième manière consiste pour le coffret 1 à générer des coupures ayant chacune une durée qui est fonction de l'information à transmettre. Le décodage par le circuit de commande 12a se fera alors en déterminant la durée des coupures successives détectées. De plus, ces différentes manières de coder l'information peuvent être combinées.

Nous allons maintenant décrire la façon dont chacune des pompes 10a, 10b communique avec le coffret 1. En fait, nous ne décrirons que la communication de la pompe 10a vers le coffret 1, étant donné que la communication de la pompe 10b vers le coffret 1 est réalisée de façon similaire.

La communication entre la pompe 10a - plus précisément, entre son circuit de commande 12a - et le coffret 1 s'effectue par le biais de la liaison d'alimentation de la pompe 10a. Autrement dit, la communication est faite à travers le cordon d'alimentation 11a de la pompe 10a.

Le circuit de commande 12a transmet une information au coffret 1 sous la forme d'une séquence de démarrages et d'arrêts du moteur 17 de la pompe 10a. Pour cela, la logique de commande 15 provoque cette séquence de démarrages et d'arrêts grâce à l'interrupteur commandé 18. De son côté, le coffret 1 détecte cette séquence en raison des variations de courant fourni à la pompe 10a grâce à ses moyens de vérification de la marche ou l'arrêt du moteur 15 - cf. résistance shunt 7 et comparateur IN/P1.

L'information à transmettre est donc codée par le circuit de commande 12a-plus précisément, par sa logique de commande 15 - sous forme d'une séquence de marches/arrêts de la pompe 10a qui est décodée par le coffret 1 - plus précisément, par la logique de commande 5 - à partir des variations de courant qu'il fournit à la pompe 10a.

Le codage de l'information par le circuit de commande 12a peut consister en ce qu'il génère des cycles marche/arrêt de la pompe 10a à une fréquence donnée qui est fonction de l'information à transmettre. Le décodage par le coffret 1 se fera alors en déterminant la fréquence des cycles marche/arrêt détectés.

Nous donnons ici un exemple de codage dans lequel l'information transmise par le circuit de commande 12a au coffret 1 indique qu'un défaut a été détecté par le circuit de commande 12a sur l'un de ses détecteurs de niveaux 13, 14 ou sur les deux. Une telle détection de défaut sur les détecteurs de niveaux peut être mis en oeuvre par la logique de commande 15 de façon connue.

Pour signaler un défaut des deux détecteurs de niveaux 14, 15, la pompe 10a génère un certain nombre de cycles marche/arrêt de la pompe 10a à une fréquence Fd1. Le circuit de commande 12a détecte ces cycles marche/arrêt et détermine s'ils se succèdent avec la fréquence Fd1. Dans l'affirmative, le coffret 1 sait que la pompe 10a présente un défaut sur les deux détecteurs de niveaux. Le coffret 1 peut alors exécuter une action spécifique en conséquence. Le nombre de cycles marche/arrêt est de préférence prédéterminé, par exemple trois. La période Td1 correspondant à la fréquence Fd1 pourra par exemple être comprise entre 2,9 et 3,1 secondes. L'allure du courant fourni à la pompe 10a par le coffret 1 en fonction du temps - pour deux cycles marche/arrêt - est illustrée par la figure 4 avec Fd1 = 1 / Td = 1/3 Hz avec un rapport durée de marche / durée d'arrêt du moteur égal à 1.

Pour signaler un défaut de l'un seulement des deux détecteurs de niveaux 14, 15, le fonctionnement est identique, sauf à ce que la fréquence Fd1 est remplacée par une fréquence Fd2. Le coffret 1 prend alors connaissance de la défaillance du détecteur de niveaux s'il a déterminé que les cycles marche/arrêt se succèdent à la fréquence Fd2. Le rapport durée de marche / durée d'arrêt du moteur reste de préférence égal à 1. Fd2 pourra par exemple être de l'ordre de la moitié de Fd1. Ainsi, dans notre exemple, la période Td2 correspondant à la fréquence Fd2 pourra être comprise entre 5,9 et 6,1 secondes.

Bien entendu, d'autres manières de coder l'information sous forme de séquences de démarrages/arrêts du moteur 17 peuvent là aussi être employées. On pourra notamment mettre en oeuvre des codages similaires à ceux cités pour le codage par coupures de l'alimentation de la pompe dans le cadre de la communication du coffret 1 vers la pompe 10a.

La pompe 10a communique de préférence vers le coffret 1 pendant les périodes où elle n'est pas entrain d'effectuer un cycle de pompage habituel dans le cas où elle est en mode actif.

Nous allons maintenant décrire un exemple de gestion de la station de relevage qui peut être mise en oeuvre par le coffret 1 - plus précisément, par sa logique de commande 5 - grâce aux possibilités de communication précédemment décrites.

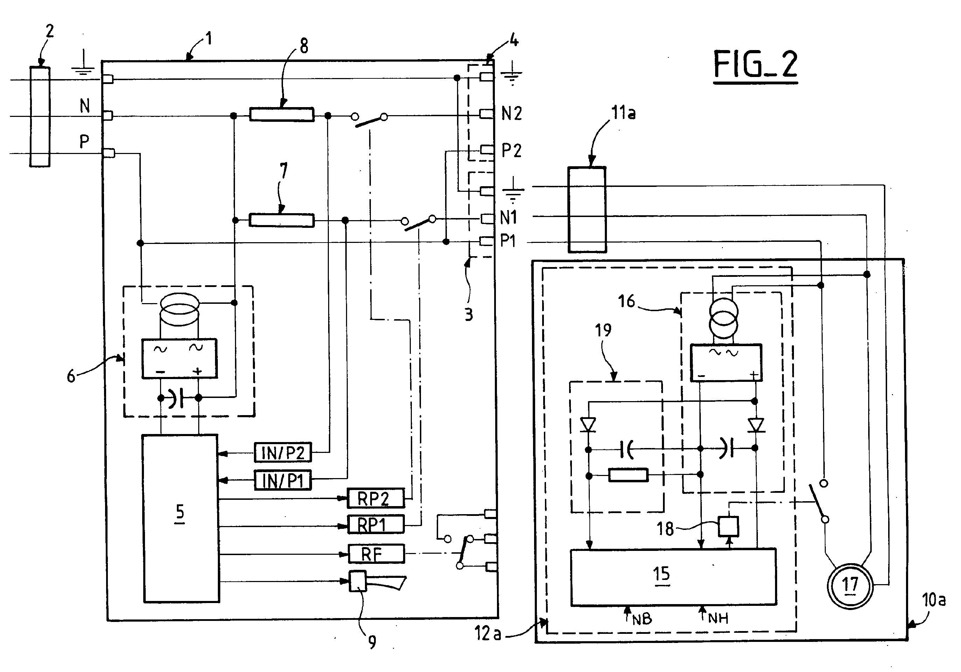

Un mode de gestion normal mis en oeuvre par le coffret 1 est le suivant. Le coffret 1 met en mode actif et en mode de veille les pompes 10a, 10b de façon alternative en inversant leur rôle après chaque cycle de pompage effectué. Ainsi, à la mise sous tension, le coffret 1 communique à la pompe 10a de se placer en mode actif et parallèlement, il communique à la pompe 10b de se placer en mode de veille. Lorsque le niveau de l'effluent augmente dans le puits 31 jusqu'à atteindre le niveau haut détecté par le détecteur 14, le circuit de commande 12a met en route la pompe 10a. Lorsque l'effluent passe en dessous du niveau bas - détecté par le détecteur 13 -, le circuit de commande 12a arrête la pompe 10a. Le coffret 1 détecte l'arrêt de la pompe 10a grâce à ses moyens de vérification de la marche du moteur 15. En conséquence, le coffret 1 communique à la pompe 10a de se placer en mode de veille et parallèlement, il communique à la pompe 10b de se placer en mode actif. En conséquence, la pompe 10b exécutera un cycle de pompage lorsque le niveau de l'effluent monte dans le puits 31 de façon similaire à la pompe 10a. Le coffret 1 détecte la fin du cycle de pompage de la pompe 10b - c'est-à-dire l'arrêt de son moteur - grâce à ses moyens de vérification de la marche du moteur de la pompe 10b. En conséquence, le coffret 1 remet la pompe 10a en mode actif et la pompe 10b en mode de veille et ainsi de suite. Ce mode de gestion est illustré par la figure 5 représentant la courbe de courant fourni à chacune des pompes 10a, 10b en fonction du temps. Chaque communication du coffret 1 vers chacune des pompes y est représentée symboliquement par un trait sous l'axe du temps avec indication de la fréquence des coupures - F1 ou F2 - dans la mise en oeuvre précédemment décrite.

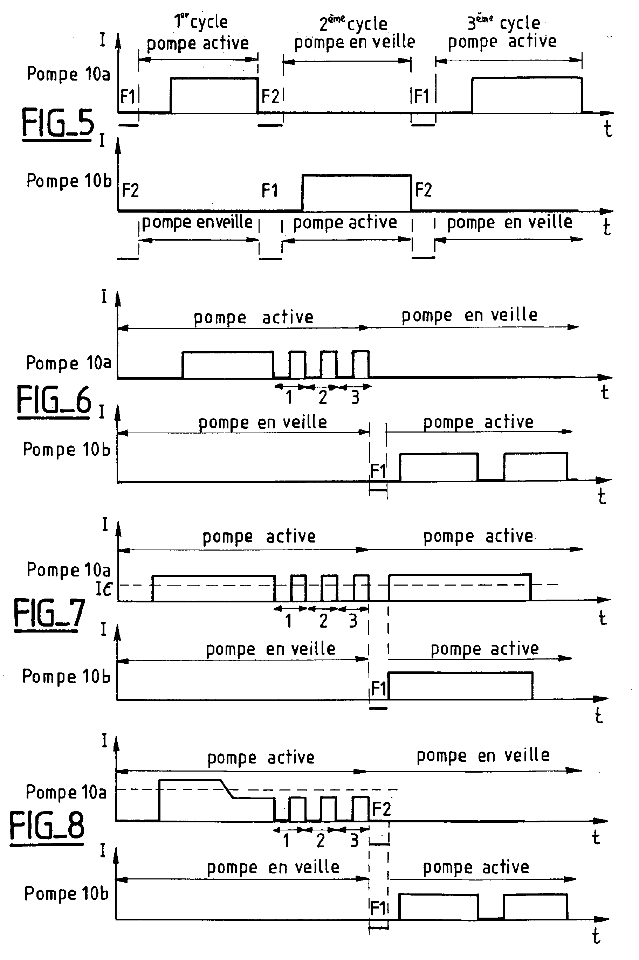

Nous allons maintenant décrire un premier mode de gestion sur défaut d'une pompe. Si durant l'application du mode de gestion normal, une des pompes 10a, 10b détecte un défaut de l'un de ses détecteurs de niveaux d'effluent 13, 14, alors elle le communique au coffret 1. Ensuite, cette pompe se met définitivement en veille. Le coffret 1 ayant eu connaissance du défaut de l'une des pompes, communique à l'autre pompe de se placer en mode actif. Le coffret 1 pourra en outre signaler le défaut grâce à sa sonnerie 9 et/ou au relais RF. Le coffret 1 laisse la première pompe en mode de veille et l'autre pompe en mode actif pour l'avenir jusqu'à par exemple l'intervention d'un opérateur pour corriger le défaut et la réinitialisation manuelle de la station de relevage. La figure 6 illustre le passage du mode de gestion normal à ce mode de fonctionnement sur défaut d'un détecteur de la pompe 10a. L'hypothèse vise le cas où la pompe 10a est en mode actif et exécute un cycle de pompage lorsque son circuit de commande 12a détecte une défaillance d'un de ces détecteurs de niveaux. La pompe 10a génère alors une séquence de trois cycles marche/arrêt-repérées 1, 2, 3 - de son moteur à la fréquence Fd2, puis elle se met en veille. En conséquence de la séquence de marches/arrêts, le coffret 1 communique à la pompe 10b de se placer en mode actif; la communication est là aussi représentée par un trait sous l'axe des abscisses et repérée par la fréquence des coupures F1.

Nous allons maintenant décrire un deuxième mode de gestion sur défaut d'une des pompes. Dans cette hypothèse, le circuit de commande de chaque pompe vérifie si ses deux détecteurs de niveaux 13, 14 présentent chacun un défaut de détection du type permanence de détection - ou aussi désigné par détection de trop plein. Pour le détecteur du niveau haut 13, une telle vérification peut consister en ce que le circuit de commande de la pompe détermine si le temps écoulé entre la mise en marche de son moteur et le passage de l'effluent sous le niveau haut dépasse un seuil prédéfini. Ce seuil prédéfini correspond au temps maximal mis par la pompe pour que l'effluent passe en dessous du niveau haut. Si le seuil est dépassé, cela signifie probablement que le détecteur 13 est bloqué, c'est-à-dire qu'il indique de façon erronée la présence de l'effluent au niveau haut. De façon similaire, pour le détecteur au niveau bas 14, une telle vérification peut consister en ce que le circuit de commande de la pompe détermine si le temps écoulé entre le passage de l'effluent sous le niveau haut et le passage de l'effluent sous le niveau bas dépasse un seuil prédéfini. Néanmoins, lorsque le circuit de commande détermine ainsi un défaut sur chacun des détecteurs, il se peut qu'en réalité les détecteurs ne soient pas bloqués. En effet, il se peut que l'on ait affaire à une inondation de sorte que la pompe active ne parvient pas à faire baisser le niveau d'effluent dans le puits 31. Il en résulte que les détecteurs de niveaux 13, 14 continuent à détecter réellement l'effluent, malgré le pompage. Ce deuxième mode de gestion sur défaut permet de discriminer les deux situations possibles dans une telle hypothèse de la façon suivante.

Si durant l'application du mode de gestion normal, une des pompes 10a, 10b détecte un défaut de type permanence de détection de tous ses détecteurs de niveaux d'effluent, alors elle le communique au coffret 1 par une séquence prédéfinie de cycles marche/arrêt de son moteur qui identifie ce type de défaut. Nous supposerons ici qu'il s'agit de la séquence à la fréquence Fd1 précitée. Puis, la pompe concernée se maintient en mode actif.

Le coffret 1 détecte ladite séquence sous forme de créneaux de courant comme décrit précédemment. En plus, le coffret 1 réalise une comparaison du courant fourni à la pompe concernée par rapport à un seuil prédéfini IC sur ces créneaux de courant ou après ces créneaux. Le seuil IC est fixé à une valeur intermédiaire entre le courant de fonctionnement à vide de la pompe et le courant de fonctionnement en charge-c'est-à-dire en refoulement effectif - de la pompe. Cette comparaison peut être effectuée par la logique de commande 5 avec les moyens de vérification - cf. éléments 7, IN/P1 ou 8, IN/P2 - en appliquant le seuil de comparaison adéquat.

Si le courant fourni à la pompe est supérieur à IC, cela signifie que la pompe refoule effectivement indiquant par là une situation d'inondation. En conséquence, le coffret 1 communique à l'autre pompe de se placer en mode actif. Les deux pompes 10a, 10b refoulent alors simultanément l'effluent jusqu'à la fin de l'inondation, chacune cessant de pomper lorsque son détecteur 14 au niveau bas ne détecte plus l'effluent. La fin de pompage de chaque pompe 10a, 10b est détectée par le coffret 1 de la même manière qu'en mode de gestion normal. En conséquence, le coffret 1 réapplique à nouveau le mode de gestion normal. Ce cas est illustré par la figure 7 qui représente le courant fourni à chaque pompe 10a, 10b en fonction du temps. L'hypothèse vise le cas où la pompe 10a est en mode actif et exécute un cycle de pompage lorsque son circuit de commande 12a détecte le défaut en question. La pompe 10a génère alors une séquence de trois cycles marche/arrêt - repérées 1, 2, 3-de son moteur à la fréquence Fd1 et se maintient en mode actif. Pendant la séquence de marches/arrêts, le coffret 1 détermine que le courant fourni à la pompe 10a est supérieur au seuil prédéfini IC. En conséquence, le coffret 1 communique à la pompe 10b de se placer également en mode actif; cette communication est là aussi représentée par un trait sous l'axe des abscisses et repérée par la fréquence des coupures F1.

Si le courant fourni à la pompe est inférieur à IC, cela signifie que la pompe tourne à vide indiquant par là que les détecteurs sont effectivement bloqués. En conséquence, le coffret 1 communique à cette pompe de se mettre en mode veille ; en outre, le coffret 1 communique à l'autre pompe de se placer en mode actif. Cet état de chaque pompe demeure ensuite inchangé par le coffret 1 jusqu'à par exemple l'intervention d'un opérateur pour corriger le défaut et la réinitialisation manuelle de la station de relevage. Ce cas est illustré par la figure 8 qui représente le courant fourni à chaque pompe 10a, 10b en fonction du temps. L'hypothèse vise le cas où la pompe 10a est en mode actif et exécute un cycle de pompage lorsque son circuit de commande 12a détecte le défaut en question. La pompe 10a génère alors une séquence de trois cycles marche/arrêt - repérées 1, 2, 3 - de son moteur à la fréquence Fd1, puis elle se met en veille. Pendant la séquence de cycles marche/arrêt, le coffret 1 détermine que le courant fourni à la pompe 10a est inférieur au seuil prédéfini IC. En conséquence, le coffret 1 communique à la pompe 10a de se placer en mode veille ; cette communication est représentée par un trait sous l'axe des abscisses de la courbe de la pompe 10a et repérée par la fréquence des coupures F2. En outre, le coffret 1 communique à la pompe 10b de se placer en mode actif; cette communication est représentée par un trait sous l'axe des abscisses de la courbe de la pompe 10b et repérée par la fréquence des coupures F1.

Dans un mode de réalisation préféré, le coffret 1 s'adapte automatiquement à la gestion d'une seule pompe ou de deux pompes suivant le nombre de pompes effectivement branchées au coffret 1. A la mise sous tension de la station de relevage, le coffret 1 alimente les deux sorties 3 et 4. Les circuits de commande 12a, 12b des deux pompes sont prévus pour faire fonctionner la pompe respective en marche forcée, quel que soit le niveau de l'effluent dans le puits 31, pendant une durée prédéfinie de l'ordre de cinq secondes lors de leur mise sous tension. Le coffret 1 détermine pendant cet intervalle la présence de chacune des pompes 10a, 10b grâce à ses moyens de vérification de la rotation du moteur de chaque pompe - cf. les éléments 7, IN/P1 et 8, IN/P2. Si le coffret 1 détermine qu'une des pompes 10a, 10b n'est pas en fonctionnement, cela signifie qu'elle n'est pas branchée. En conséquence, le coffret 1 communique à la pompe qui est branchée, de se placer en mode actif; le coffret 1 peut cesser d'alimenter sa sortie libre puisque aucune pompe y est branchée. Si, au contraire, il détermine que les deux pompes 10a, 10b sont en fonctionnement, le coffret 1 applique le mode de gestion normal précité.

Bien entendu, la présente invention n'est pas limitée aux exemples et au mode de réalisation décrits et représentés, mais elle est susceptible de nombreuses variantes accessibles à l'homme de l'art.

Ainsi, dans le mode de réalisation décrit, les pompes ont un moteur monophasé. Si les pompes sont dotées de moteurs triphasés, la communication coffret vers pompe peut s'effectuer en provoquant des coupures sur une seule des trois phases d'alimentation des moteurs. De façon similaire, la détection par le coffret du courant fourni à une pompe peut se faire par rapport à une seule phase.

Par ailleurs, le coffret de gestion et d'alarme décrit est adapté pour gérer deux pompes. Bien évidemment, un tel coffret peut être prévu pour gérer une seule pompe ou plus de deux pompes, en mettant en oeuvre le procédé de communication décrit dans la relation du coffret avec chacune des pompes qu'il alimente.

L'on comprendra qu'il est possible de mettre en oeuvre le procédé de communication pris dans le sens coffret vers pompe, indépendamment de la mise en oeuvre pompe vers coffret.

Dans le mode de réalisation décrit, les informations véhiculées dans le sens coffret vers pompe ou pompe vers coffret sont à chaque fois au nombre de deux : mode actif (F1)/mode de veille (F2) d'une part et défaut d'un détecteur (Fd2)/défaut de deux détecteurs (Fd1). Bien entendu, l'on n'est pas limité à deux, mais il est possible de véhiculer autant d'informations différentes que souhaitées en recourant aux techniques de codages indiquées ou à d'autres.

Par ailleurs, le procédé de communication permet de véhiculer d'autres informations que celles décrites. Ainsi, la pompe peut communiquer au coffret non seulement l'existence d'un défaut sur un détecteur de niveau, mais également la nature de ce défaut, par exemple un défaut du type permanence de détection ou au contraire, du type absence de détection.

Le procédé de l'invention est particulièrement adapté à être mis en oeuvre pour la gestion de pompes de relevage de liquide automatiques du type décrit, c'est-à-dire effectuant des cycles de pompage sous la commande d'un circuit associé par rapport à un niveau haut du liquide et un niveau inférieur. Il peut aussi être utilisé sur des pompes électriques d'un type différent.

Les circuits électriques du coffret et/ou les circuits de commande des pompes peuvent être prévus pour fonctionner indifféremment avec une alimentation du réseau à 50 Hz ou 60 Hz.

Bien entendu, l'invention peut s'appliquer non seulement à stations de relevage d'effluents, mais plus généralement de tout liquide.

## Revendications

1. Procédé de communication entre un circuit de commande (12a) d'une pompe électrique (10a) et un circuit distant (1) en liaison électrique avec la pompe par l'intermédiaire du circuit de commande, le circuit distant alimentant en électricité la pompe au travers de cette liaison électrique (11a), dans lequel le circuit distant et le circuit de commande communiquent au travers de la liaison électrique.

2. Procédé selon la revendication 1, **caractérisé en ce que** la communication du circuit distant vers le circuit de commande comprend les étapes de :
application d'une séquence prédéfinie d'une ou plusieurs coupures de l'alimentation de la pompe par le circuit distant ;
détection des coupures de l'alimentation de la pompe par le circuit de commande.

3. Procédé selon la revendication 2, **caractérisé en ce qu'**il comprend une étape de :
commande de la pompe par le circuit de commande en fonction des coupures de l'alimentation de la pompe détectées.

4. Procédé selon la revendication 3, **caractérisé en ce que** dans l'étape c), le circuit de commande (12a) commande la pompe (10a) en fonction de la fréquence des coupures de l'alimentation de la pompe détectées.

5. Procédé selon la revendication 4, **caractérisé en ce que** :
dans l'étape a), le circuit distant applique la séquence de coupures de l'alimentation de la pompe avec une première fréquence prédéfinie (F2) ;
dans l'étape b), le circuit de commande détermine si la fréquence des coupures de l'alimentation de la pompe détectées correspond à la première fréquence ;
dans l'étape c), le circuit de commande met en veille la pompe s'il a déterminé que la fréquence des coupures de l'alimentation de la pompe détectées correspond à la première fréquence.

6. Procédé selon la revendication 4 ou 5, **caractérisé en ce que** :
- dans l'étape a), le circuit distant applique la séquence de coupures de l'alimentation de la pompe avec une deuxième fréquence prédéfinie (F1) ;
- dans l'étape b), le circuit de commande détermine si la fréquence des coupures de l'alimentation de la pompe détectées correspond à la deuxième fréquence ;
- dans l'étape c), le circuit de commande active la pompe s'il a déterminé que la fréquence des coupures de l'alimentation de la pompe détectées correspond à la deuxième fréquence.

7. Procédé selon l'une quelconque des revendications 2 à 6, **caractérisé par** une étape de vérification par le circuit distant (1) si le courant fourni à la pompe est inférieur à un seuil prédéterminé qui est inférieur ou égal au courant absorbé par la pompe en marche, dans lequel le circuit distant n'applique l'étape a) que si la vérification est positive.

8. Procédé selon l'une quelconque des revendications 2 à 7, **caractérisé en ce que** chaque coupure a une durée de l'ordre de 0,1 à 0,3 seconde.

9. Procédé selon l'une quelconque des revendications 1 à 8, **caractérisé en ce que** la communication du circuit de commande (12a) vers le circuit distant (1) comprend les étapes de :
application d'une séquence prédéfinie d'une ou plusieurs mises en marche et arrêts de la pompe par le circuit de commande ;
détection par le circuit distant (1) des variations de courant fourni à la pompe (10a).

10. Procédé selon la revendication 9, **caractérisé par** l'application de l'étape d) dans le cas où le circuit de commande (12a) détermine un défaut de fonctionnement de la pompe (10a) tel qu'un défaut d'au moins un détecteur de niveau de liquide (13 ; 14) de la pompe.

11. Procédé selon la revendication 10, **caractérisé en ce que** :
- dans l'étape d), le circuit de commande (12a) applique une séquence de mises en marche et d'arrêts de la pompe avec une fréquence prédéfinie (Fd1 ; Fd2) qui est fonction du défaut déterminé ;
- dans l'étape e), le circuit distant détermine si la fréquence des variations de courant fourni à la pompe détectées correspond à la fréquence prédéfinie.

12. Dispositif de pompage comprenant une pompe électrique (10a) et un circuit de commande (12a) de la pompe, comprenant des moyens pour mettre en oeuvre le procédé de communication selon l'une quelconque des revendications 2 à 11 lorsqu'il est branché sur une alimentation électrique.

13. Dispositif d'alimentation d'une ou plusieurs pompes, comprenant un circuit pour mettre en oeuvre le procédé selon l'une quelconque des revendications 2 à 11 lorsqu'il alimente une pompe.

14. Station de relevage de liquide comprenant :
- une première pompe électrique (10a) et un circuit de commande (12a) de la première pompe ;
- une deuxième pompe électrique (10b) et un circuit de commande (12b) de la deuxième pompe ; et
- un circuit distant (1);
dans lequel :
- le circuit distant (1) est en première liaison électrique (11a) avec la première pompe (10a) par l'intermédiaire du circuit de commande (12a) de la première pompe, le circuit distant alimentant en électricité la première pompe au travers de cette première liaison électrique ;
- le circuit distant (1) est en deuxième liaison électrique (11b) avec la deuxième pompe (10b) par l'intermédiaire du circuit de commande (12b) de la deuxième pompe, le circuit distant alimentant en électricité la deuxième pompe au travers de cette deuxième liaison électrique ;
et dans lequel le circuit distant et le circuit de commande de la première pompe ainsi que le circuit distant et le circuit de commande de la deuxième pompe mettent en oeuvre le procédé de communication selon l'une quelconque des revendications 1 à 11.

15. Procédé de gestion de la station de pompage selon la revendication 14, dans lequel le circuit distant (1) détecte la fin du pompage de la première pompe (10a) en mesurant le courant qu'il fournit à la première pompe et à la fin du pompage de la première pompe, le circuit distant communique au circuit de commande (12a) de la première pompe de mettre la première pompe en veille et au circuit de commande (12b) de la deuxième pompe d'activer la deuxième pompe (10b).

16. Procédé selon la revendication 15, **caractérisé en ce que** la première pompe comprend un détecteur de niveau de liquide (13 ; 14), que le circuit de commande (12a) de la première pompe détermine un défaut du détecteur, qu'en cas de détermination d'un défaut du détecteur, le circuit de commande de la première pompe communique l'existence du défaut au circuit distant qui en conséquence communique au circuit de commande (12b) de la deuxième pompe d'activer la deuxième pompe (10b).

17. Procédé selon la revendication 15 ou 16, **caractérisé en ce que** la première pompe comprend une pluralité de détecteurs de niveau de liquide (13, 14), que le circuit de commande (12a) de la première pompe détermine un défaut des détecteurs du type permanence de détection, qu'en cas de détermination d'un défaut du type permanence de détection de tous les détecteurs, le circuit de commande (12a) de la première pompe communique l'existence de ce défaut au circuit distant (1) qui en conséquence mesure le courant qu'il fournit à la première pompe (10a) et communique au circuit de commande (12a) de la première pompe d'activer ou de mettre en veille la première pompe en fonction du courant mesuré.

18. Procédé selon la revendication 17, **caractérisé en ce que**, en conséquence de la communication de l'existence de ce défaut par le circuit de commande de la première pompe au circuit distant, le circuit distant (1) communique en outre au circuit de commande (12b) de la deuxième pompe d'activer la deuxième pompe (10b).
